# EUROPÄISCHE PATENTANMELDUNG

(11) **EP 0 984 116 A1**
(43) Veröffentlichungstag der Anmeldung: **08.03.2000**
(21) Anmeldenummer: 99117131.5
(22) Anmeldetag: 31.08.1999
(51) Int. Cl.: E04F 11/18, F16B 7/04

(54) **Handlaufsystem**

(30) Priorität: 03.09.1998 DE 19840225
(71) Anmelder: HEWI HEINRICH WILKE GMBH, 34454 Bad Arolsen (DE)
(72) Erfinder: Schnatz, Eckhard, 35104 Lichtenfels (DE); Rentel, Ewald, 34454 Bad Arolsen (DE)
(74) Vertreter: Manitz, Finsterwald & Partner

(57) **Zusammenfassung**

Die Erfindung betrifft ein Handlaufsystem wenigstens mit einem länglichen Griffelement und zwei Befestigungselementen zur Befestigung jeweils eines der beiden Längsenden des Griffelements an einer Wand, wobei das Handlaufsystem einen Kopplungsstift aufweist, der an einer Stirnseite eines der Befestigungselemente befestigt oder befestigbar ist, und wobei das Griffelement einen durchgehenden Längshohlraum aufweist, der entlang der Längsrichtung des Griffelements einen konstanten Querschnitt aufweist und der an den beiden Längsenden des Griffelements jeweils an einer Aufnahmeöffnung mündet. Die Erfindung betrifft außerdem ein Verfahren zur Montage eines solchen Handlaufsystems und ein Verfahren zur Herstellung eines hierfür erforderlichen Griffelements.

## Beschreibung

Die Erfindung betrifft ein Handlaufsystem wenigstens mit einem länglichen Griffelement und zwei Befestigungselementen zur Befestigung jeweils eines der beiden Längsenden des Griffelements an einer Wand. Die Erfindung betrifft außerdem ein Verfahren zur Montage eines solchen Handlaufsystems und ein Verfahren zur Herstellung eines hierfür erforderlichen Griffelements.

Das mittels der Befestigungselemente an einer Wand befestigte Handlaufsystem ermöglicht es, sich an dem Griffelement abzustützen. Zur Verbindung des Griffelements mit den Befestigungselementen besitzen das Griffelement und die Befestigungselemente bekannter Handlaufsysteme an ihren Längsenden bzw. Stirnseiten Verbindungsmittel, wie beispielsweise Schraubverbindungen. Nachteilig hieran ist, daß die erwünschten Abmessungen eines für einen bestimmten Montageort vorgesehenen Handlaufsystems bereits vor der Auslieferung des Handlaufsystems an den Montageort bekannt sein müssen, damit werksseitig ein Griffelement geeigneter Länge hergestellt und mit den Verbindungsmitteln versehen werden kann. Dies erhöht den individuellen Arbeitsaufwand an der Produktionsstätte und verringert die Flexibilität bei der Montage des Handlaufsystems an der Baustelle.

Es ist eine Aufgabe der Erfindung, ein Handlaufsystem zu schaffen, das als Serienprodukt mit Standardmaßen hergestellt werden kann und gleichzeitig bei der Montage eine Anpassung seiner Abmessungen an die individuellen Gegebenheiten ermöglicht.

Diese Aufgabe wird für ein Handlaufsystem der eingangs genannten Art dadurch gelöst, daß das Handlaufsystem wenigstens einen Kopplungsstift aufweist, der an einer Stirnseite eines der Befestigungselemente befestigt oder befestigbar ist, und daß das Griffelement einen durchgehenden Längshohlraum aufweist, der entlang der Längsrichtung des Griffelements einen konstanten Querschnitt aufweist und der an den beiden Längsenden des Griffelements jeweils an einer Aufnahmeöffnung mündet.

Der an der Stirnseite des betreffenden Befestigungselements vorgesehene Kopplungsstift ermöglicht eine Verbindung dieses Befestigungselements mit dem Griffelement, indem der Kopplungsstift an einem Längsende des Griffelements durch die Aufnahmeöffnung in den Längshohlraurm eingeführt, insbesondere einsteckt wird.

Das erfindungsgemäße Handlaufsystem kann auf vorteilhaft einfache Weise den gewünschten Abmessungen angepaßt werden. Hierfür ist lediglich die Länge des Griffelements auf das erwünschte Maß zu verringern (ablängen), beispielsweise durch Absägen. Dadurch steht aufgrund des durchgehenden Längshohlraums an dem abgelängten Längsende des Griffelements eine neue Aufnahmeöffnung für die Aufnahme des Kopplungsstifts zur Verfügung, wobei diese neue Aufnahmeöffnung denselben Querschnitt besitzt wie die ursprünglich vorhandene Aufnahmeöffnung. Das Handlaufsystem kann dadurch in Standardmaßen hergestellt und ausgeliefert werden, wobei es eine individuelle Anpassung auf der Baustelle ermöglicht.

Um ein möglichst hohes Maß an Flexibilität und Modularität zu gewährleisten, ist es bevorzugt, wenn für jedes Griffelement jeweils zwei identische Kopplungsstifte vorgesehen sind, die jeweils einem Längsende des Griffelements und einem Befestigungselement zugeordnet sind. Grundsätzlich ist es für die Möglichkeit des individuellen Ablängens des Griffelements jedoch ausreichend, wenn ein einziger Kopplungsstift vorgesehen ist, der die Verbindung des betreffenden Befestigungselements mit dem abgelängten Längsende des Griffelements ermöglicht. Das dem abgelängten Längsende des Griffelementes gegenüberliegende Längsende kann in diesem Fall auf herkömmliche Weise mit einem Befestigungselement verbunden sein, beispielsweise durch eine Schraubverbindung.

In einer bevorzugten Ausführungsform des erfindungsgemäßen Handlaufsystems entspricht der Querschnitt des Längshohlraums dem Querschnitt des Kopplungsstifts dahingehend, daß die Innenwände des Längshohlraums den durch die Aufnahmeöffnung in den Längshohlraum eingeführten Kopplungsstift formschlüssig umgreifen. Dies ermöglicht eine unmittelbare Verbindung des betreffenden Befestigungselements mit dem Griffelement, ohne daß hierfür ein Adapter zur Anpassung des Querschnitts des Kopplungsstifts an den Querschnitt des Längshohlraums erforderlich ist.

Es ist bevorzugt, wenn der Längshohlraum sich zentral und/oder geradlinig innerhalb des Griffelements erstreckt. Um bei dem montierten Handlaufsystem ein unbeabsichtigtes Verdrehen des Griffelements bezüglich der Befestigungselemente zu verhindern, ist es weiterhin bevorzugt, wenn der Querschnitt des Längshohlraums und/oder der Querschnitt des Kopplungsstifts nicht rotationssymmetrisch, also nicht kreisrund ist. Beispielsweise können diese Querschnitte eine quadratische, rechteckige, dreieckige, sechseckige oder ovale Form aufweisen.

Um ein verklemmendes und somit spielfreies Einstecken des Kopplungsstifts in die Aufnahmeöffnung zu ermöglichen, sind der Zwischenraum zwischen der Aufnahmeöffnung und dem Kopplungsstift sowie die jeweiligen Toleranzen vorzugsweise möglichst gering gewählt. Außerdem kann zu diesem Zweck der Kopplungsstift dergestalt ausgebildet sein, daß sich sein Querschnitt entlang der Längsachse des Kopplungsstifts zu demjenigen Befestigungselement hin, an dem der Kopplungsstift befestigt oder befestigbar ist, vergrößert. Schließlich können an dem Kopplungsstift auch Fixiermittel, beispielsweise Widerhaken, vorgesehen sein, die ein unbeabsichtigtes Lösen des aufgesteckten Griffelements von dem betreffenden Befestigungselement verhindern.

Die Befestigung des Kopplungsstifts an der Stirnseite des betreffenden Befestigungselements kann durch Verschweißen, Verschrauben oder Verrasten vorgesehen sein. Beispielsweise kann das betreffende Befestigungselement eine durchgehende oder einseitig geöffnete Längsöffnung aufweisen, in die ein Kopplungsstab eingeführt ist, der an dem Befestigungselement befestigt wird und dessen aus der Längsöffnung jeweils herausragender Teil den Kopplungsstift oder zwei Kopplungsstifte bildet. Alternativ hierzu kann der Kopplungsstift bzw. können die Kopplungsstifte an dem Befestigungselement angeformt sein.

Es ist bevorzugt, wenn zwei der Befestigungselemente des Handlaufsystems als End-Befestigungselemente ausgebildet sind mit jeweils lediglich einem einzigen Kopplungsstift an jener Stirnseite, die mit einem Griffelement verbunden werden soll. In dem Fall, daß das Handlaufsystem mehrere Griffelemente aufweist, können außerdem Zwischen-Befestigungselemente vorgesehen sein zur Verbindung jeweils zweier Griffelemente miteinander und zur Befestigung dieser zwei Griffelemente an der Wand. Die Befestigungselemente besitzen vorzugsweise eine dem Querschnitt des Griffelements ensprechende und/oder zylindrische Grundform.

Das Handlaufsystem kann außerdem Halteelemente aufweisen, über welche die Befestigungselemente an der Wand befestigt werden können. Ein solches Halteelement kann an dem zugeordneten Befestigungselement durch eine Schraubverbindung befestigt oder an dem Befestigungselement angeformt sein.

Falls das Handlaufsystem mehrere Griffelemente aufweist, kann es ausreichend sein, wenn lediglich ein einziges der mehreren Griffelemente für eine individuelle Anpassung des Handlaufsystems vorgesehen ist, d.h. wenn lediglich dieses einzige Griffelement einen durchgehenden Längshohlraum aufweist.

Die Erfindung ist nicht auf ein reines Handlaufsystem beschränkt. Das Griffelement, die Befestigungselemente und der Kopplungsstift können auch Teil eines Geländersystems sein, das bezüglich der Horizontalen geneigt angeordnet ist. Ein solches Geländersystem kann beispielsweise ein kurvenförmig abgewinkeltes Griffelement aufweisen, dessen beide Längsenden jeweils eine Aufnahmeöffnung aufweisen und somit die Kompatibilität mit den erfindungsgemäßen Befestigungselementen bzw. deren Kopplungsstiften gewährleisten. Ein solches abgewinkeltes Griffelement muß jedoch keinen durchgehenden Längshohlraum aufweisen, wenn es ausreichend ist, die individuelle Anpassung durch Ablängen von geradlinigen Griffelementen vorzunehmen.

In einer bevorzugten Ausführungsform ist das Griffelement aus Holz oder aus Kunststoff gefertigt, und zwar insbesondere aus zwei Längsformen entsprechend dem nachstehend erläuterten erfindungsgemäßen Verfahren.

In einer weiteren bevorzugten Ausführungsform ist das Griffelement als ein Hohlkörper aus Metall gebildet, und zwar insbesondere einstückig, zylindrisch und/oder mit einem Kunststoff-Überzug. Bei dieser Ausführungsform müssen der Querschnitt des Längshohlraums des Griffelements und der Querschnitt des Kopplungsstifts sich nicht unbedingt entsprechen. Es ist nämlich möglich, nach dem Ablängen des Metall-Griffelements eine als Adapter fungierende Kopplungsbuchse in den Längshohlraum des Metall-Griffelements einzubringen, beispielsweise einzuschlagen, um somit nach der individuellen Anpassung der Länge des Metall-Griffelements eine Verbindung mit dem zugeordneten Befestigungselement zu ermöglichen. Eine derartige Verwendung einer Kopplungsbuchse ist auch bei einem Hohlkörper aus Holz oder Kunststoff möglich.

Die vorstehend genannte Möglichkeit, das Griffelement mit einem durchgehenden Längshohlraum aus Holz zu fertigen, ist für die bei Handlaufsystemen üblicherweise vorgesehene Länge des Griffelements nicht ohne weiteres realisierbar. Daher ist es eine weitere Aufgabe der Erfindung, ein Verfahren zur Herstellung eines solchen Griffelements zu schaffen, das einen durchgehenden Längshohlraum aufweist und das für das erfindungsgemäße Handlaufsystem verwendet werden kann.

Diese Aufgabe wird dadurch gelöst, daß zunächst eine erste Längsform mit einer Nut versehen wird, beispielsweise durch Fräsen, und daß anschließend die erste Längsform an derjenigen Seite, welche die Nut aufweist, mit einer zweiten Längsform verbunden, beispielsweise verleimt wird, so daß diese Nut den Längshohlraum oder einen Teil desselben bildet.

Auf diese Weise kann ein von den beiden Längsformen seitlich umschlossener Längshohlraum erzeugt werden. Dabei weist die Nut innerhalb der ersten Längsform insbesondere einen eckigen Querschnitt auf, wobei die Seitenkanten der Nut beispielsweise parallel bzw. rechtwinklig zu der Bearbeitungsfläche an der ersten Längsform verlaufen, oder in einem 45°-Winkel hierzu.

Durch das erfindungsgemäße Herstellungsverfahren kann also ein Längshohlraum in vorteilhaft wenigen Arbeitsschritten erzeugt werden. Außerdem kann auf diese Weise leicht ein Längshohlraum in dem Griffelement erzeugt werden, der - wie für das erfindungsgemäße Handlaufsystem bevorzugt - einen bezüglich der Längsrichtung des Griffelements nicht rotationssymmetrischen Querschnitt aufweist. Die Erzeugung eines Längshohlraums in einem Griffelement aus Holz ist überdies auf herkömmliche Weise, insbesondere durch Bohren, nicht möglich.

In einer bevorzugten Weiterbildung des erfindungsgemäßen Herstellungsverfahrens kann vor dem Verbinden der beiden Längsformen miteinander auch die zweite Längsform mit einer Nut versehen werden, die zusammen mit der Nut der ersten Längsform den Längshohlraum bildet. Dadurch läßt sich eine zentrale Anordnung des Längshohlraums bezüglich des Griffelements erzielen.

Schließlich ist es bevorzugt, wenn die beiden Längsformen nach ihrem Verbinden miteinander zu einer länglichen Zylinderform verarbeitet werden, beispielsweise durch Drehen.

Entsprechend den erläuterten Nachteilen der bekannten Handlaufsysteme, die eine werksseitige individuelle Anpassung erforderlich machen, ist es eine weitere Aufgabe der Erfindung, ein Verfahren zur Montage eines Handlaufsystems zu schaffen, das eine Anpassung der Abmessungen des Handlaufsystems an die sich am Montageort ergebenden individuellen Verhältnisse auf einfache und flexible Weise ermöglicht.

Diese weitere Aufgabe wird zum einen dadurch gelöst, daß bei einem erfindungsgemäßen Handlaufsystem zunächst gegebenenfalls der Kopplungsstift an der Stirnseite des betreffenden Befestigungselements befestigt wird und nacheinander die gewünschte Länge des Griffelements ermittelt wird, das Griffelement zu der gewünschten Länge abgelängt wird, ein Befestigungselement mit dem abgelängten Längsende des Griffelements verbunden wird, indem der Kopplungsstift des Befestigungselements in die Aufnahmeöffnung des abgelängten Längsendes geführt wird, und das Griffelement mittels der mit den Längsenden des Griffelements verbundenen Befestigungselemente an einer Wand befestigt wird.

Dieses Montageverfahren eignet sich insbesondere für ein Handlaufsystem, bei dem der Querschnitt des Längshohlraums jenem des Kopplungsstifts entspricht, da in diesem Fall nach dem Ablängen des Griffelements lediglich der Kopplungsstift in die Aufnahmeöffnung des Griffelements eingesteckt werden muß.

Die weitere Aufgabe der Erfindung wird zum anderen dadurch gelöst, daß bei einem erfindungsgemäßen Handlaufsystem zunächst gegebenenfalls der Kopplungsstift an der Stirnseite des betreffenden Befestigungselements befestigt wird und nacheinander die gewünschte Länge des Griffelements ermittelt wird, das Griffelement zu der gewünschten Länge abgelängt wird, an dem abgelängten Längsende des Griffelements eine Kopplungsbuchse befestigt wird, ein Befestigungselement mit dem abgelängten Längsende des Griffelements verbunden wird, indem der Kopplungsstift des Befestigungselements in eine Aufnahmeöffnung an der Kopplungsbuchse geführt wird, und das Griffelement mittels der mit den Längsenden des Griffelements verbundenen Befestigungselemente an einer Wand befestigt wird.

Dieses Montageverfahren ist besonders für jene Ausführungsformen des Handlaufsystems geeignet, bei denen das Griffelement als ein Hohlkörper aus Metall gebildet ist. In diesem Fall wird nach dem Ablängen die Kopplungsbuchse in das betreffende Längsende des Griffelements eingeführt, um als Adapter den Kopplungsstift zur Verbindung des Griffelements mit dem betreffenden Befestigungselement aufzunehmen. Dabei besitzen der Kopplungsstift und die Aufnahmeöffnung der Kopplungsbuchse vorzugsweise zueinander formschlüssige und nicht rotationssymmetrische Querschnitte.

Da alle genannten Schritte der beiden erfindungsgemäßen Montageverfahren, insbesondere das jeweilige Ablängen des Griffelements, nach Ausliefering des Handlaufsystems an dem Montageort durchgeführt werden können, ermöglichen die beiden Montageverfahren eine hohe Flexibilität hinsichtlich der letztlich gewählten Länge des Griffelements.

Weitere Ausführungsformen der Erfindung sind in den Unteransprüchen beschrieben. Die Erfindung wird nachfolgend beispielhaft anhand der Zeichnungen erläutert. In diesen zeigen:
- Fig. 1: ein erfindungsgemäßes Handlaufsystem vor der Montage,
- Fig. 2: das Handlaufsystem in montiertem Zustand,
- Fig. 3: eine in der unteren Hälfte aufgeschnittene Seitenansicht eines Zwischen-Befestigungselements des Handlaufsystems,
- Fig. 4: eine in der unteren Hälfte aufgeschnittene Seitenansicht eines End-Befestigungselements des Handlaufsystems,
- Fig. 5: eine Frontansicht der Befestigungselemente gemäß Fig. 3 und 4, und
- Fig. 6: eine Frontansicht eines Griffelements des Handlaufsystems.

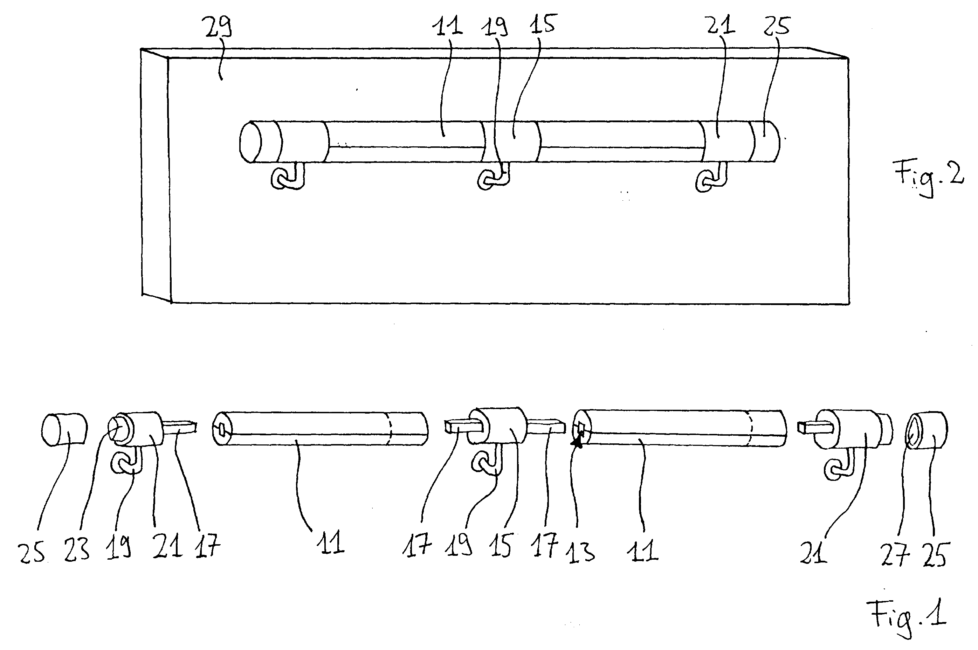

Fig. 1 zeigt in einer schematischen Perspektivansicht das erfindungsgemäße Handlaufsystem vor der Montage der verschiedenen Elemente des Handlaufsystems aneinander bzw. an einer Wand. Das Handlaufsystem weist zwei Griffelemente 11 auf mit jeweils einem durchgehenden, vierkantförmigen Längshohlraum 13, der an den beiden Längsenden des Griffelements 11 jeweils an einer Aufnahmeöffnung 14 quadratischen Querschnitts mündet.

Weiterhin besitzt das Handlaufsystem ein Zwischen-Befestigungselement 15 mit zwei an einander gegenüberliegenden Stirnseiten befestigten, vierkantförmigen Kopplungsstiften 17 und einem an der Mantelfläche des Zwischen-Befestigungselements 15 befestigten Halteelement 19. Außerdem enthält das Handlaufsystem zwei End-Befestigungselemente 21 jeweils mit einem vierkantförmigen Kopplungsstift 17 an einer Stirnseite und einem Abschlußvorsprung 23 an einer hierzu gegenüberliegenden Stirnseite, sowie jeweils mit einem Halteelement 19. Schließlich umfaßt das Handlaufsystem zwei Abschlußelemente 25, die jeweils an einer Stirnseite eine Verbindungsöffnung 27 aufweisen.

Die Griffelemente sind aus Holz gefertigt, die Befestigungselemente 15, 21, die Halteelemente 19 und die Abschlußelemente 25 aus Metall.

Fig. 1 zeigt die Elemente 11, 15, 21, 25 des Handlaufsystems in loser Form, wie sie vom Herstellungswerk zum Montageort geliefert werden. Für die Montage des Handlaufsystems wird zunächst am Montageort die letztlich erwünschte Gesamtlänge des montierten Handlaufsystems bestimmt. In Abhängigkeit von dieser Gesamtlänge wird die Länge eines oder der beiden Griffelemente 11 entsprechend angepaßt, indem diese Elemente 11 abgesägt werden, wie in Fig. 1 beispielhaft gestrichelt eingezeichnet.

Anschließend werden die Elemente 11, 15, 21, 25 der Länge nach in der in Fig. 1 gezeigten Anordnung miteinander steckverbunden und danach in miteinander steckverbundener Form mittels der Halteelemente 19 an einer Wand 29 befestigt. Das derart verkürzte und vollständig an der Wand 29 montierte Handlaufsystem ist in Fig. 2 gezeigt.

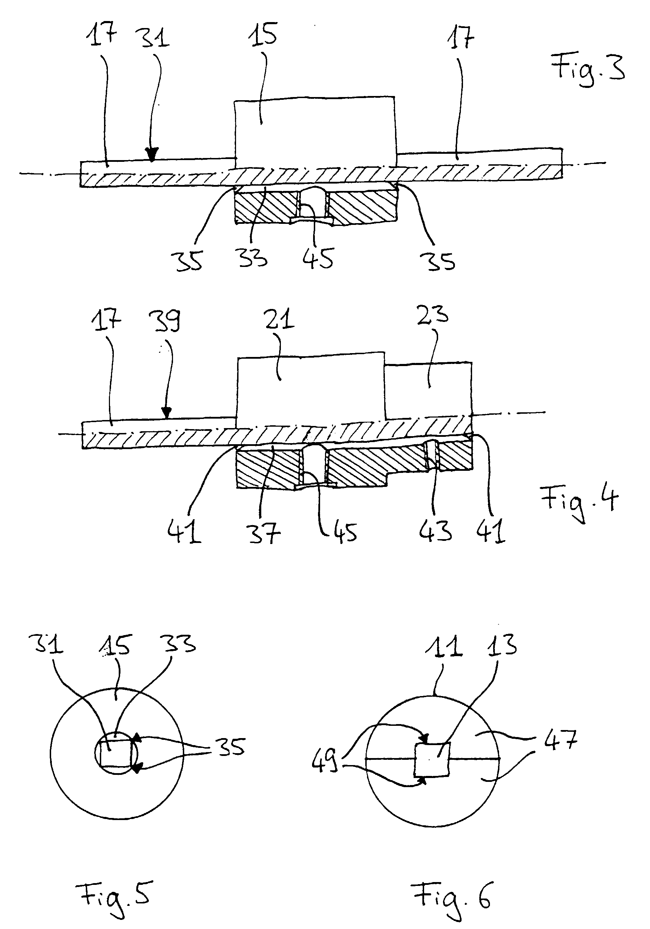

Aus Fig. 3 geht hervor, daß die beiden Kopplungsstifte 17 an dem Zwischen-Befestigungselement 15 dadurch befestigt sind, daß ein vierkantförmiger Kopplungsstab 31 in eine durchgehende, runde Längsöffnung 33 innerhalb des Zwischen-Befestigungselements 15 eingeführt und an Schweißstellen 35 im Bereich der Stirnseiten des Zwischen-Befestigungselements 15 mit diesem fest verbunden ist. Die Kopplungsstifte 17 sind also durch die beiden über das Zwischen-Befestigungselement 15 jeweils überstehenden Längsenden des Kopplungsstabs 31 gebildet.

Fig. 4 zeigt das entsprechende Prinzip für das End-Befestigungselement 21. Dieses weist eine Längsöffnung 37 auf, in die ein vierkantförmiger Kopplungsstab 39 dergestalt eingeführt ist, daß er an seinem einen Ende bündig mit der Stirnseite des Abschlußvorsprungs 23 abschließt und mit seinem gegenüberliegenden Ende aus dem End-Befestigungselement 21 als Kopplungsstift 17 herausragt. An Schweißstellen 41 ist der Kopplungsstab 39 mit dem End-Befestigungselement 21 fest verbunden.

Wie in Figuren 1 und 2 gezeigt, kann das Abschlußelement 25 zur Befestigung an dem End-Befestigungselement 21 mit seiner Verbindungsöffnung 27 auf den Abschlußvorsprung 23 aufgesetzt werden und dort anschließend mittels einer Schraube fixiert werden. Zu diesem Zweck weist der Abschlußvorsprung 23 - wie in Fig. 4 gezeigt - ein radial gerichtetes Fixiergewinde 43 auf Das Abschlußelement 25 kann anstelle der in Figuren 1 und 2 gezeigten zylindrischen Form auch als 90°-Endbogen ausgebildet sein, der ausgehend von dem betreffenden End-Befestigungselement 21 in Richtung der Wand 29 gekrümmt ist.

Die Fig. 3 und 4 zeigen weiterhin, daß die Befestigungselemente 15 bzw. 21 an ihrer Mantelfläche jeweils ein radial gerichtetes Befestigungsgewinde 45 besitzen, über welches das zugeordnete Halteelement 19 mit dem betreffenden Befestigungselement 15 bzw. 21 verbunden werden kann.

Fig. 5 zeigt das Zwischen-Befestigungselement 15 in einer Frontansicht. Dieselbe Darstellung ergibt sich für das End-Befestigungselement 21 für eine Ansicht, bezogen auf Fig. 4, von links.

Aus Fig. 6 wird deutlich, daß das Griffelement 11 aus zwei Halbzylinderformen zusammengesetzt ist, die jeweils an ihrer planen Segmentfläche eine rechteckige Nut 49 aufweisen. Die beiden Nuten 49 ergeben letztlich den durchgehenden Längshohlraum 13.

### Bezugszeichenliste

- 11: Griffelement
- 13: Längshohlraum
- 15: Zwischen-Befestigungselement
- 17: Kopplungsstift
- 19: Halteelement
- 21: End-Befestigungselement
- 23: Abschlußvorsprung
- 25: Abschlußelement
- 27: Verbindungsöffnung
- 29: Wand
- 31: Kopplungsstab
- 33: Längsöffnung
- 35: Schweißstelle
- 37: Längsöffnung
- 39: Kopplungsstab
- 41: Schweißstelle
- 43: Fixiergewinde
- 45: Befestigungsgewinde
- 47: Halbzylinderform
- 49: Nut

## Patentansprüche

1. Handlaufsystem, wenigstens mit einem länglichen Griffelement (11) und zwei Befestigungselementen (15, 21) zur Befestigung jeweils eines der beiden Längsenden des Griffelements (11) an einer Wand (29),
**dadurch gekennzeichnet,**
daß das Handlaufsystem wenigstens einen Kopplungsstift (17) aufweist, der an einer Stirnseite eines der Befestigungselemente (15, 21) befestigt oder befestigbar ist, und
daß das Griffelement (11) einen durchgehenden Längshohlraum (13) aufweist, der entlang der Längsrichtung des Griffelements (11) einen konstanten Querschnitt aufweist und der an den beiden Längsenden des Griffelements jeweils an einer Aufnahmeöffnung mündet.

2. Handlaufsystem nach Anspruch 1,
**dadurch gekennzeichnet,**
daß der Querschnitt des Längshohlraums (13) dem Querschnitt des Kopplungsstifts (17) entspricht, und/oder
daß der Querschnitt des Längshohlraums (13) und/oder der Querschnitt des Kopplungsstifts (17) jeweils bezüglich einer Rotation um die Längsachse des Längshohlraums (13) bzw. des Kopplungsstifts (17) unsymmetrisch, insbesondere jeweils quadratisch ist.

3. Handlaufsystem nach einem der vorhergehenden Ansprüche,
**dadurch gekennzeichnet,**
daß der Kopplungsstift (17) an der Stirnseite des betreffenden Befestigungselements (15, 21) befestigt ist, indem der Kopplungsstift (17) mit diesem Befestigungselement (15, 21) verschweißt, verschraubt, verrastet oder an dem Befestigungselement (15, 21) angeformt ist, und/oder
daß jeweils ein Kopplungsstift (17) an zwei einander gegenüberliegenden Stirnseiten eines Befestigungselements (15) befestigt ist, indem ein beidseitig über dieses Befestigungselement (15) hervorstehender Kopplungsstab (31) mit dem Befestigungselement (15) verschweißt ist.

4. Handlaufsystem nach einem der vorhergehenden Ansprüche,
**dadurch gekennzeichnet,**
daß ein Befestigungselement (15) als ein Zwischen-Befestigungselement ausgebildet ist mit zwei einander gegenüberliegenden Stirnseiten, an denen jeweils ein Kopplungsstift (17) befestigt oder befestigbar ist, oder
daß ein Befestigungselement (21) als ein End-Befestigungselement ausgebildet ist, bei dem nur an einer einzigen Stirnseite der Kopplungsstift (17) befestigt oder befestigbar ist.

5. Handlaufsystem nach einem der vorhergehenden Ansprüche,
**gekennzeichnet**
durch wenigstens ein einem Befestigungselement (15, 21) zugeordnetes Halteelement (19), durch welches das Befestigungselement (15, 21) an der Wand (29) befestigbar ist, und/oder
daß das Griffelement (11), die Befestigungselemente (15, 21) und der Kopplungsstift (17) im montierten Zustand des Handlaufsystems entlang einer gemeinsamen Längsachse angeordnet sind.

6. Handlaufsystem nach einem der vorhergehenden Ansprüche,
**gekennzeichnet**
durch eine Mehrzahl von Griffelementen (11), eine bezüglich dieser Mehrzahl um eins verminderte Anzahl von Zwischen-Befestigungselementen (15) und zwei End-Befestigungselemente (21), und/oder
daß für jedes Griffelement (11) genau zwei Kopplungsstifte (17) vorgesehen sind, die jeweils einer Aufnahmeöffnung des Griffelements (11) und einem Befestigungselement (15, 21) zugeordnet sind.

7. Handlaufsystem nach einem der vorhergehenden Ansprüche,
**dadurch gekennzeichnet,**
daß es als Geländersystem ausgebildet ist, und/oder
daß das Griffelement (11) aus Holz gefertigt ist.

8. Handlaufsystem nach einem der vorhergehenden Ansprüche,
**dadurch gekennzeichnet,**
daß das Griffelement (11) aus zwei insbesondere halbzylindrischen Längsformen (47) gebildet ist, wobei wenigstens eine der Längsformen (47) eine Nut (49) aufweist, die zumindest einen Teil des Längshohlraums (13) bildet, und/oder
daß das Griffelement als ein vorzugsweise zylindrischer Hohlkörper aus Metall gebildet ist, insbesondere mit einem Kunststoff-Überzug.

9. Handlaufsystem nach einem der vorhergehenden Ansprüche,
**gekennzeichnet**
durch wenigstens eine Kopplungsbuchse, die an dem Griffelement befestigbar ist und die eine Aufnahmeöffnung aufweist zur Aufnahme eines Kopplungsstifts.

10. Verfahren zur Herstellung eines Griffelements (11) mit einem durchgehenden Längshohlraum (13) zur Verwendung für ein Handlaufsystem nach einem der Ansprüche 1 bis 8,
**dadurch gekennzeichnet,**
daß eine erste Längsform (47) mit einer Nut (49) versehen wird, insbesondere durch Fräsen, und
daß anschließend die erste Längsform (47) an derjenigen Seite, welche die Nut (49) aufweist, mit einer zweiten Längsform (47) verbunden, insbesondere verklebt wird, so daß die Nut (49) zumindest einen Teil des Längshohlraums (13) bildet.

11. Verfahren nach Anspruch 10,
**dadurch gekennzeichnet,**
daß vor dem Verbinden der beiden Längsformen (47) miteinander die zweite Längsform (47) ebenfalls mit einer Nut (49) versehen wird, die letztlich zusammen mit der Nut (49) der ersten Längsform (47) den Längshohlraum (13) bildet, und/oder
daß es sich bei der ersten und/oder der zweiten Längsform (47) um einen länglichen Quader handelt, und/oder
daß die beiden miteinander verbundenen Längsformen (47) zu einer Zylinderform verarbeitet werden, insbesondere durch Drehen.

12. Verfahren zur Montage eines Handlaufsystems gemäß einem der Ansprüche 1 bis 8,
**dadurch gekennzeichnet,**
daß gegebenenfalls der Kopplungsstift (17) an der Stirnseite des betreffenden Befestigungselements (15, 21) befestigt wird, und
daß nacheinander
- die gewünschte Länge des Griffelements (11) ermittelt wird,
- das Griffelement (11) zu der gewünschten Länge abgelängt wird,
- ein Befestigungselement (15, 21) mit dem abgelängten Längsende des Griffelements (11) verbunden wird, indem der Kopplungsstift (17) des Befestigungselements (15, 21) in die Aufnahmeöffnung des abgelängten Längsendes geführt wird, und
- das Griffelement (11) mittels der mit den Längsenden des Griffelements verbundenen Befestigungselemente (15, 21) an einer Wand (29) befestigt wird.

13. Verfahren zur Montage eines Handlaufsystems gemäß einem der Ansprüche 1 bis 9,
**dadurch gekennzeichnet,**
daß gegebenenfalls der Kopplungsstift an der Stirnseite des betreffenden Befestigungselements befestigt wird, und
daß nacheinander
- die gewünschte Länge des Griffelements ermittelt wird,
- das Griffelement zu der gewünschten Länge abgelängt wird,
- an dem abgelängten Längsende des Griffelements eine Kopplungsbuchse befestigt wird,
- ein Befestigungselement mit dem abgelängten Längsende des Griffelements verbunden wird, indem der Kopplungsstift des Befestigungselements in eine Aufnahmeöffnung an der Kopplungsbuchse geführt wird, und
- das Griffelement mittels der mit den Längsenden des Griffelements verbundenen Befestigungselemente an einer Wand befestigt wird.
